# EUROPÄISCHE PATENTSCHRIFT

(11) **EP 0 883 477 B1**
(45) Veröffentlichungstag und Bekanntmachung des Hinweises auf die Patenterteilung: **27.10.1999**
(21) Anmeldenummer: 97900925.5
(22) Anmeldetag: 30.01.1997
(51) Int. Cl.: B29C 45/14

(54) **VERFAHREN ZUM HERSTELLEN VON MIT BEDRUCKTEN ETIKETTEN VERSEHENEN FORMKÖRPERN NACH DEM SOGENANNTEN IN-MOULD-LABELLING (IML)-VERFAHREN SOWIE ETIKETT FÜR EIN IN-MOULD-LABELLING (IML)-VERFAHREN**
METHOD OF PRODUCING MOULDED BODIES PROVIDED WITH PRINTED LABELS ACCORDING TO THE SO-CALLED IN-MOULD LABELLING (IML) METHOD AND LABEL FOR USE IN AN IN-MOULD LABELLING METHOD
PROCEDE POUR PRODUIRE DES CORPS MOULES MUNIS D'ETIQUETTES IMPRIMEES SUIVANT LE PROCEDE D'ETIQUETAGE DANS LE MOULE (IML) ET ETIQUETTE APPROPRIEE S'UTILISANT DANS UN PROCEDE D'ETIQUETAGE DANS UN MOULE (IML)

(30) Priorität: 14.05.1996 DE 19619462
(43) Veröffentlichungstag der Anmeldung: 16.12.1998
(73) Patentinhaber: Auer, Hans, 8126 Zumikon (CH)
(72) Erfinder: Auer, Hans, 8126 Zumikon (CH)
(74) Vertreter: Hug Interlizenz AG
(86) Internationale Anmeldenummer: CH9700033
(87) Internationale Veröffentlichungsnummer: WO9743103

(56) Entgegenhaltungen:
- EP-A- 0 419 001
- EP-A- 0 546 741
- WO-A-96/34730
- DE-A- 2 011 954
- FR-A- 1 372 909
- FR-A- 2 725 656
- US-A- 3 270 101
- PATENT ABSTRACTS OF JAPAN vol. 17, no. 286 (M-1422), 2.Juni 1993 & JP 05 016171 A (SEKISUI CHEM CO LTD), 26.Januar 1993,

## Beschreibung

### TECHNISCHES GEBIET

Die vorliegende Erfindung bezieht sich auf das Gebiet des In-Mould-Labelling (IML). Sie betrifft ein Verfahren zum Herstellen von mit bedruckten Etiketten versehenen Formkörpern nach dem sogenannten In-Mould-Labelling(IML)-Verfahren, bei welchem Verfahren durch Bedrucken einer orientierten Trägerfolie aus einem thermoplastischen Polymer mit einer Druckschicht bedruckte Etiketten erzeugt, die bedruckten Etiketten in eine Form eingelegt und mit einem in die Form eingebrachten und bei erhöhten Temperaturen geformten Formkörper stoffschlüssig verbunden werden.

Ein solches Verfahren ist z.B. aus der Druckschrift EP-A1-0 546 741 bekannt.

### STAND DER TECHNIK

Es ist seit langem bekannt, bedruckte Körper, insbesondere Behälter in Form von Bechern, Schalen oder Flaschen, aus thermoplastischen Polymeren wie Polyäthylen, Polypropylen (PP), Polystyren oder dgl. nach dem sogenannten In-Mould-Labelling(IML)-Verfahren herzustellen. Bei diesem Verfahren werden zunächst aus einer Trägerfolie bedruckte Etiketten (labels) hergestellt, die dann in die Tiefzieh-, Blas- oder Spritzgussform eingelegt werden und sich beim Formen des Körpers mit dem Körper untrennbar verbinden. Als Material für die Trägerfolie wird dabei häufig derselbe Kunststoff verwendet, aus dem auch der Körper besteht, so dass Etikett und Körper nach dem Formvorgang praktisch eine Einheit bilden. Derartige IML-Verfahren sind z.B. in dem französischen Patent FR-B-1.372.909, dem amerikanischen Patent US-A-3,270,101, oder den europäischen Patentanmeldungen EP-A2-0 249 363, EP-A1-0 546 741 und EP-A1-0 626 667 beschrieben.

An den bedruckten Formkörper werden verschiedene Anforderungen gestellt: Zum einen sollen Körper und Etikett unlösbar miteinander verbunden sein. Zum anderen soll der Druck auf dem Etikett bzw. dem Formkörper möglichst kratzfest und/oder waschfest sein. Weiterhin soll das Etikett so beschaffen sein, dass es den beim Formungsprozess üblicherweise auftretenden erhöhten Temperaturen und Drücken standhält und das Druckbild sich nicht unkontrolliert verzieht oder zerfliesst. Schliesslich soll der bedruckte Formkörper ein insgesamt ästhetisch ansprechendes Erscheinungsbild haben. Diese gestellten Anforderungen beeinflussen massgeblich Struktur und Materialauswahl der Etiketten.

In der bereits genannten FR-B-1.372.909 wird das bedruckte Etikett (8) mit der Druckseite zur Wand in die Spritzgussform eingelegt. Um das Druckbild beim Formungsprozess gegen Beschädigungen wie z.B. Kratzer zu schützen, ist das Etikett auf der Druckseite mit einem durchsichtigen Schutzfilm (10) aus einem Acetat oder einem anderen Kunststoff überzogen, der dadurch aufgebracht wird, dass Film und Etikett gemeinsam zwischen zwei Druckrollen hindurchlaufen. Eine orientierte Trägerfolie wird hier nicht erwähnt.

In der EP-A1-0 419 001 wird bei einem IML-Verfahren ebenfalls eine durchsichtige Abdeckschicht vewendet. Die Druckschrift betrifft jedoch kein Verfahren oder eine Vorrichtung zum Etikettieren von Formkörpern, sondern bezieht sich auf die Herstellung von farbigen Formteilen, die durch eine (ganzheitliche) In-Mould-Laminierung eines Formkörpers mit einer farbigen, relativ dicken Folie erzeugt werden und beispielsweise als Autoteile wie Stosstangen oder Armaturenbretter Verwendung finden. Als Trägerfilm für das Laminat werden thermoplastische Polymere verwendet. Ueber eine Orientierung der Trägerfilme wird in der Druckschrift nichts ausgesagt. Die Trägerfilme werden mit einer Farbe beschichtet und anschliessend mit einer klaren Abdeckschicht überzogen. Die fertigen Laminate werden schliesslich auf zwei verschiedene Weisen mit dem Formkörper verbunden: Im einen Fall werden sie vorgeformt und anschliessend in die Spritzgussform eingelegt und mit dem eingespritzten Material fest verbunden. Im anderen Fall werden sie ungeformt vorgehalten und erst durch die Hochdruckinjektion der heissen Spritzmasse an die Spritzform angeformt. In beiden Fällen wird das Laminat beim Anformen um bis zu 20% gestreckt. Die Abdeckschicht hat dabei die Wirkung, dass beim Strecken des Laminates der Glanz des farbigen Auftrags nicht verloren geht.

In der US-A-3,270,101 wird das bedruckte Etikett wahlweise mit der Druckseite zur Wand oder zum Formkörper hin in die Form eingelegt. Als Trägerfolie wird für das Etikett eine nicht-orientierte Polypropylenfolie verwendet, die mit wärmebeständigen Druckfarben bedruckt wird. Der Formkörper wird ebenfalls aus Polypropylen gebildet, welches in die Form eingespritzt wird. Wenn das Druckbild des Etiketts zum Formkörper hin orientiert ist, kann die exponierte Farbschicht durch eine zusätzliche Schicht (34A) aus Polyurethan oder Epoxidharz vor der Beanspruchung beim Spritzvorgang geschützt werden.

In der EP-A1-0 626 667 wird ein mehrschichtig aufgebautes Etikett verwendet, welches eine relativ dicke, Hohlräume enthaltende, innere Kunststoffschicht umfasst, die beidseitig mit dünneren, hohlraumfreien Kunststoffschichten verbunden ist. Die drei Schichten bestehen vorzugsweise aus Polyäthylen geringer Dichte und werden vorzugsweise durch Koextrusion hergestellt. Das Druckbild wird auf die eine äussere Schicht aufgedruckt und kann zusätzlich mit einem Lacküberzug abgedeckt sein.

In jüngerer Zeit haben sich als Material für die Trägerfolien von IML-Etiketten wegen der besonderen Eigenschaften zunehmend biaxial orientierte (d.h. in orthogonalen Richtungen gestreckte) Folien auf der Basis von Propylen-Polymeren (Polypropylen) durchgesetzt (siehe dazu die EP-A1-0 611 102).

Diese Folien vereinigen in sich die Vorteile, dass sie gut bedruckbar sind, eine hinreichende Steifigkeit aufweisen, und sich problemlos mit aus PP hergestellten Formkörpern verbinden, die aus abfalltechnischen Gründen zunehmend bevorzugt werden. Die Trägerfolien können grundsätzlich durchsichtig oder undurchsichtig sein. Undurchsichtige Trägerfolien, die als Untergrund besonders gut zum Druckbild kontrastieren, werden beispielsweise hergestellt, indem in der Folie beim Strecken Hohlräume ("voids") erzeugt werden. Für die Erzeugung der voids werden in das Folienmaterial organische oder anorganische Teilchen, sogenannte "voiding agents" eingemischt, die beim Strecken Ausgangspunkt der Hohlraumbildung sind. Beispiele für solche "voiding agents" sind Teilchen aus Polyamid, Polyester oder Kreide.

Es hat sich nun herausgestellt, dass die Verwendung von gestreckten, beispielsweise mit Hohlräumen versehenen ("voided") Trägerfolien für das IML-Verfahren unter bestimmten Umständen dazu führen kann, dass der fertige, bedruckte Formkörper im Bereich des Etiketts aufgrund einer fein gekräuselten Oberfläche, die wahrscheinlich durch ein Schrumpfen der gestreckten Folie beim Formungsvorgang entsteht, ein unerwünschtes lederartiges Aussehen erhält. Insbesondere behindert oder verhindert eine derartige Kräuselung die Herstellung eines bedruckten Formkörpers mit einer hochglänzenden Oberfläche, wie er in vielen Fällen bevorzugt wird.

In der EP-A1-0 546 741 ist nun zur Vermeidung des lederartigen Aussehens die Verwendung einer mehrschichtigen, biaxial orientierten Trägerfolie vorgeschlagen worden, die aus einer Kernschicht aus pigmentiertem, hohlraumfreien Polypropylen, einer Unterschicht aus mit Hohlräumen versehenen Polypropylen, und einer gut bedruckbaren Oberschicht besteht, die z.B. Propylen und Aethylen enthält. Die relativ dünne Unterschicht sorgt dabei für ein gutes Anhaften des Etiketts am Formkörper, die relativ dicke Kernschicht für einen formstabilen, undurchsichtigen, weissen Untergrund, und die Oberschicht für eine gute Bedruckbarkeit, so dass jede der Schichten eine spezielle Funktion der Trägerfolie übernimmt und darauf abgestimmt ist. Andere Mehrschicht-Trägerfolien sind aus der EP-A1-0 611 102 oder der EP-A1-0 312 226 bekannt.

Die Verwendung von speziell aufgebauten und angepassten Trägerfolien zur Erzielung einer optisch hochwertigen und ansprechenden Oberfläche des bedruckten Formkörpers hat jedoch verschiedene Nachteile: Zum einen ist das Ergebnis des IML-Verfahrens massgeblich abhängig von der Verwendung einer speziellen Trägerfolie, wodurch die Flexibilität des Verfahrens stark eingeschränkt wird. Zum anderen lassen sich durch die speziellen Trägerfolien unerwünschte Oberflächeneffekte zwar deutlich verringern, aber nicht ganz vermeiden. Schliesslich wird selbst bei glatter Oberfläche nur ein vergleichsweise matter Glanz des Druckbildes erreicht.

### DARSTELLUNG DER ERFINDUNG

Es ist nun Aufgabe der Erfindung, ein IML-Verfahren anzugeben, das weitgehend unabhängig von der Art der verwendeten Trägerfolie auf einfache Weise und ohne grössere Umstellungen im Herstellungsprozess zu einer hochwertigen und insbesondere hochglänzenden Oberfläche des bedruckten Formkörpers führt, sowie ein Etikett für ein solches Verfahren anzugeben.

Die Aufgabe wird bei einem Verfahren der eingangs genannten Art dadurch gelöst, dass zum Erzielen einer glänzenden Oberfläche beim fertigen Formkörper die Etiketten nach dem Aufbringen der Druckschicht und vor dem Einlegen in die Form mit einer durchsichtigen Abdeckschicht beschichtet werden. Die erfindungsgemässe durchsichtige Abdeckschicht führt überraschend und auf einfache Weise zu einer markanten Verbesserung der optischen Oberflächengüte des bedruckten Formkörpers. Dies wird einerseits der optischen Wirkung der Abdeckschicht zugeschrieben, die beim IML entstehende und durchaus vorhandene Kräuselungen der Etikettoberfläche weniger sichtbar werden lässt. Dies wird zum anderen einer mechanisch stabilisierenden Wirkung der Abdeckschicht zugeschrieben, die ein Schrumpfen der Trägerfolie beim Formungsprozess und damit die Ausbildung der unerwünschten Oberflächenkräuselung behindert.

Eine erste bevorzugte Ausführungsform des Verfahrens nach der Erfindung zeichnet sich dadurch aus, dass die Abdeckschicht aus einem UV-vernetzbaren Klarlack besteht, und insbesondere ein kationischer oder radikaler, UV-vernetzbarer Klarlack verwendet wird. Durch die Verwendung eines solchen Klarlackes wird eine besonders schnell und gleichmässig trocknende, stabile Abdeckschicht erzeugt, die allfällige Unebenheiten der Oberfläche besonders gut ausgleicht, sehr gut haftet, und das Druckbild zusätzlich zuverlässig schützt. Es versteht sich dabei von selbst, dass im Rahmen der Erfindung anstelle des Klarlacks auch ein eingefärbter durchsichtiger Lack verwendet werden kann.

Ein besonders stabiler Aufbau des Druckbildes bei einer günstigen Führung des Verfahrens ergibt sich, wenn gemäss einer weiteren bevorzugten Ausführungsform des erfindungsgemässen Verfahrens die Druckschicht im Offsetdruckverfahren auf die Trägerfolie aufgebracht wird, und für den Offsetdruck UV-vernetzbare Farben verwendet werden. Drucken und Aufbringen der Abdeckschicht lassen sich so in einem Durchgang durchführen, wenn beispielsweise der Offsetdruckmaschine eine Lackierstation nachgeschaltet wird.

Damit die Abdeckschicht ihre Stabilisierungs- und Ausgleichsfunktion ausüben kann, muss sie eine ausreichende Dicke aufweisen. Gemäss einer bevorzugten Ausführungsform der Erfindung wird zur Bildung der Abdeckschicht der Klarlack mit einer Dicke von mehreren Gramm pro m² der Trägerfolie, insbesondere mit einer Dicke von mehr als 3 Gramm pro m², vorzugsweise zwischen 3 und 10 Gramm pro m², aufgetragen.

Das erfindungsgemässe Etikett für ein In-Mould-Labelling(IML)-Verfahren, welches eine orientierte Trägerfolie aus einem thermoplastischen Polymer umfasst, die mit einer Druckschicht bedruckt ist, zeichnet sich dadurch aus, dass es über der Druckschicht mit einer durchsichtigen Abdeckschicht beschichtet ist.

Eine bevorzugte Ausführungsform des Etiketts nach der Erfindung ist dadurch gekennzeichnet, dass die Abdeckschicht aus einem UV-vernetzbaren, insbesondere kationischen oder radikalen, Klarlack besteht, und dass die Trägerfolie eine ein- oder mehrschichtige Folie ist, welche überwiegend aus biaxial orientiertem Polypropylen (PP) besteht und Hohlräume enthält.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in schematischer Darstellung verschiedene Schritte bei einem beispielhaften IML-Verfahren nach dem Stand der Technik;
- Fig. 2: in einer zu Fig. 1 vergleichbaren Darstellung Verfahrensschritte bei einem bevorzugten Ausführungsbeispiel des Verfahrens nach der Erfindung;
- Fig. 3: den möglichen Effekt der Verbiegung des Schichtverbundes aufgrund unterschiedlicher Kontraktion beim Verfahren nach der Erfindung; und
- Fig. 4: eine Weiterbildung des Verfahrens nach der Erfindung zum Kompensieren der Verbiegung gemäss Fig. 3.

### WEGE ZUR AUSFÜHRUNG DER ERFINDUNG

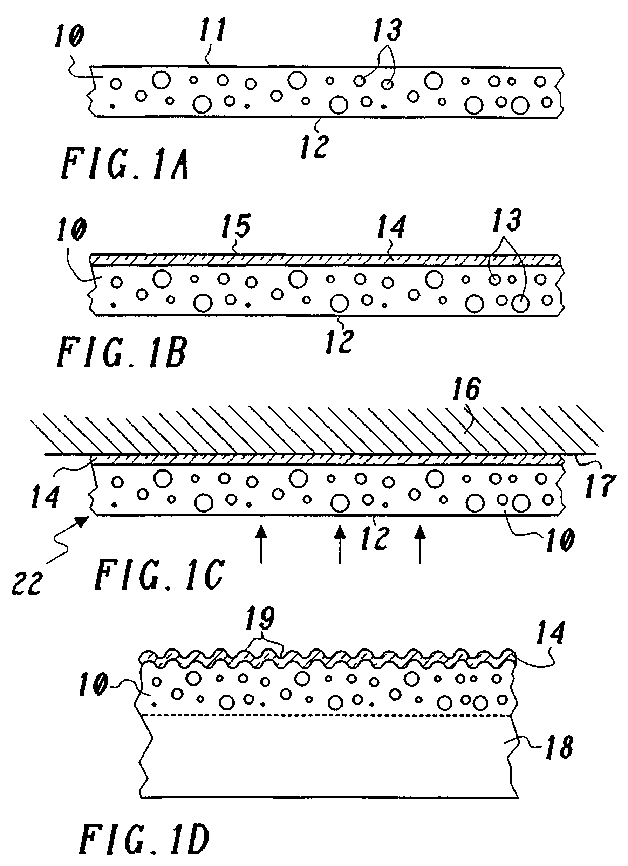

In den verschiedenen Teilbildern (A) bis (D) der Fig. 1 sind verschiedene Verfahrensschritte eines beispielhaften IML-Verfahrens nach dem Stand der Technik dargestellt, wobei die einzelnen Schichten im Querschnitt gezeigt sind. Ausgangspunkt für die Herstellung der beim IML-Verfahren verwendeten Etiketten ist gemäss Fig. 1A eine Trägerfolie 10 mit einer Schichtdicke von beispielsweise 30-200 µm, die eine bedruckbare Oberseite 11 und eine Unterseite 12 zur Verbindung mit dem Formkörper aufweist. Die Trägerfolie 10 besteht aus einem thermoplastischen Polymer, insbesondere biaxial orientiertem Polypropylen, in welchem durch einen biaxialen Streckvorgang Hohlräume 13 erzeugt worden sind, die in Fig. 1 schematisch durch unterschiedlich grosse Kreise angedeutet sind. Die Hohlräume ("voids") 13 bewirken eine Opazität der Trägerfolie 10, die als kontraststeigernd für das aufgebrachte Druckbild erwünscht ist. Die Trägerfolie 10 ist in Fig. 1 der Einfachheit halber einschichtig dargestellt. Sie kann jedoch und wird auch in der Regel mehrschichtig sein, um einerseits eine gute Verbindung mit dem Formkörper, und andererseits eine gute Bedruckbarkeit zu gewährleisten. Auch sind zusätzliche Pigmentierungen möglich, um die optische Undurchlässigkeit der Folie zu erhöhen. Zu den verschiedenen Möglichkeiten des Folienaufbaus wird auf die eingangs zitierten Druckschriften verwiesen.

Die Trägerfolie 10 wird nun auf ihrer Oberseite gemäss Fig. 1B mit einem Druckbild (Text, Zahlen, Figuren, graphische oder photographische Darstellungen etc.) bedruckt, wobei die in Fig. 1B schematisch dargestellte Druckschicht 14 entsteht. Es versteht sich von selbst, dass die Druckschicht 14, wenn verschiedene Farben in mehreren Druckvorgängen hintereinander aufgebracht werden, aus mehreren übereinander angeordneten Farbschichten zusammengesetzt ist, die der Einfachheit halber nicht gezeigt sind. Das Bedrucken kann mittels verschiedener Verfahren wie Tampondruck, Flexodruck, Tiefdruck, Offsetdruck oder dgl. erfolgen. Als Farben können lösungsmittelhaltige oder auch lösungsmittelfreie, z.B. oxidierende oder UV-vernetzbare Farben verwendet werden. Das Bedrucken erfolgt zweckmässigerweise auf einer grösserflächigen Folienbahn oder einem Bogenzuschnitt, die anschliessend durch Schneiden und/oder Stanzen in einzelne Etiketten unterteilt werden.

Die einzelnen Etiketten 22 werden dann gemäss Fig. 1C in eine IML-Spritzguss-, Blas- oder Tiefziehform 16 eingelegt, wie dies beispielsweise in der EP-A2-0 249 363 gezeigt ist, und dort elektrostatisch oder durch Unterdruck gehalten. Die Druckschicht 14 liegt dabei üblicherweise mit ihrer Oberseite 15 an der Innenwand 17 der Form 16 an. Die Form wird dann geschlossen und das Material für den zu etikettierenden Formkörper in die Form eingebracht. Beim Spritzguss (z.B. von Joghurt-, Eis- oder Magarinebechern etc.) wird dabei ein thermoplastisches Polymer, im Falle von Etiketten auf Polypropylen-Trägerfolie üblicherweise ebenfalls Polypropylen, unter hohem Druck (mehr als 40 t) und erhöhten Temperaturen (deutlich mehr als 100°C) in die Form eingespritzt. Das eingespritzte Polymer füllt den Raum zwischen der Unterseite 12 des Etiketts 22 und der (nicht dargestellten) Gegenseite der Form 16 und verbindet sich untrennbar mit der Trägerfolie 10. Es entsteht dann gemäss Fig. 1D ein Formkörper 18, in welchen die Trägerfolie 10 bzw. das Etikett 22 praktisch nahtlos integriert ist.

Es hat sich bei dieser Art des IML-Verfahrens nun in der Praxis gezeigt, dass die Trägerfolie 10 beim Formungsprozess auf der Oberseite eine Kräuselung 19 ausbildet bzw. Falten aufwirft, die dem fertigen Formkörper 18 im Bereich des Etiketts ein mattes, lederartiges Aussehen verleihen. Eine Erklärung für dieses Verhalten mag darin zu suchen sein, dass durch die beim Formungsprozess auftretenden vergleichsweise hohen Temperaturen die mit den Hohlräumen 13 versehene, gestreckte Trägerfolie 10 sich im Volumen durch eine Verkleinerung der Hohlräume 13 zusammenzieht (wie dies in Fig. 1D angedeutet ist), während die Oberflächenschicht ihre ursprüngliche Fläche beibehält. Ein vergleichbares Verhalten wird auch bei gestreckten bzw. orientierten Folien beobachtet, die keine speziell gebildeten Hohlräume aufweisen. Die Oberfläche passt sich dann dem schrumpfenden Volumen durch oberflächliche Faltenbildung an. Da die Kräuselung 19 und das damit verbundene matte Aussehen der Oberfläche das Aussehen des Druckbildes beeinträchtigt und in vielen Fällen unerwünscht ist, wird hier mit dem erfindungsgemässen Verfahren auf überraschend einfache Weise Abhilfe geschaffen.

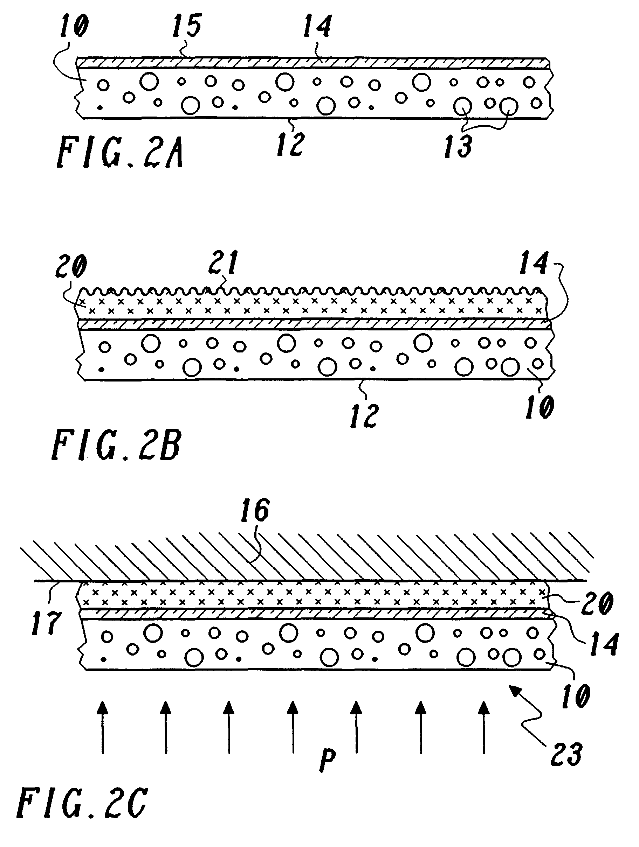

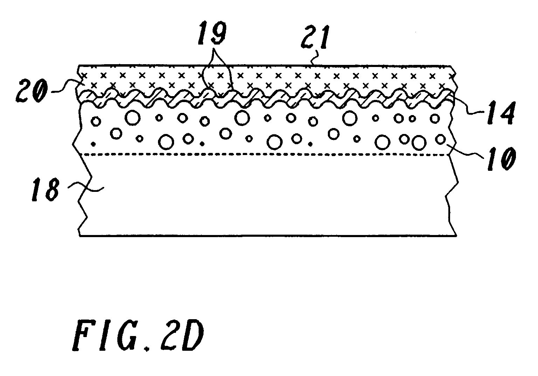

Ein bevorzugtes Ausführungsbeispiel des Verfahrens nach der Erfindung ist in Fig. 2 gezeigt, wobei die dargestellte Schrittfolge der Fig. 1 vergleichbar ist. Es wird gemäss Fig. 2A von der mit einer Druckschicht 14 bedruckten Trägerfolie 10 ausgegangen, wie sie in Fig. 1B vorliegt. Die Trägerfolie 10 ist vorzugsweise eine ein- oder mehrschichtige Folie, welche überwiegend aus biaxial orientiertem Polypropylen (PP) besteht und vorzugsweise Hohlräume 13 enthält. Die mit der Druckschicht 14 bedruckte Trägerfolie 10 wird nun gemäss Fig. 2B mit einer durchsichtigen Abdeckschicht 20 beschichtet. Die Abdeckschicht 20 besteht vorzugsweise aus einem UV-vernetzbaren Klarlack. Bewährt hat sich beispielsweise ein radikaler, d.h. durch Radikalpolymerisation härtender Lack vom Typ Wessco Nr. 7001 bzw.7002 bzw. 7003 der Schweizerischen Firma Schmid & Rhyner. Ein solcher Lack lässt sich leicht und gleichmässig auftragen und schnell und sicher durchtrocknen.

Wird für das Bedrucken vorteilhafterweise ein Offset- oder Flexodruckverfahren mit UV-vernetzbaren Farben eingesetzt, kann der Druckmaschine einfach ein Lackierwerk (z.B. ein Flexolackierwerk mit Rasterwalzen in geeigneter Linienzahl) oder ein separates Druckwerk nachgeschaltet werden, so dass sich ein sehr gut kompatibler und kompakter Druck- und Lackierprozess ergibt. Insbesondere wird für die Abdeckschicht 20 ein kationischer oder radikalhärtender UV-vernetzbarer Klarlack verwendet, weil hier nach dem Belichten mit UV-Licht eine selbsttätige und vollständige Durchtrocknung erfolgt. Als bewährtes Beispiel für einen kationischen Lack sei der Lack Bargoflex UV Nr. 36-00052 der Schweizerischen Firma Sicpa Aarberg genannt. Zur Bildung der Abdeckschicht 20 wird der Klarlack mit einer Dicke von mehreren Gramm pro m² der Trägerfolie 10 aufgetragen. Die ausgleichenden Eigenschaften der Abdeckschicht sind besonders gut, wenn der Klarlack mit einer Dicke von mehr als 3 Gramm pro m², vorzugsweise zwischen 3 und 10 Gramm pro m², aufgetragen wird.

Beim Auftragen der Abdeckschicht 20 durch ein mit Rollen arbeitendes Lackierwerk und das schnelle anschliessende Aushärten mittels UV-Licht ergibt sich in der Regel für die Oberfläche 21 der Abdeckschicht 20 eine gekräuselte Struktur, wie sie in Fig. 2B angedeutet ist. Es hat sich nun jedoch herausgestellt, dass diese an sich unerwünschte Struktur der Oberfläche 21 beim anschliessenden IML-Vorgang durch die dort herrschenden hohen Temperaturen und Drücke beim Anpressen der Etiketten an die die Wände der Form weitgehend verschwindet.

Die aus der fertig beschichteten Trägerfolie herausgeschnittenen oder -gestanzten Etiketten 23 werden dann gemäss Fig. 2C mit der Oberseite 21 der Abdeckschicht gegen die Innenwand 17 der Form 16 in die Form eingelegt und durch Einbringen des Materials für den Formkörper mit dem sich bildenden Formkörper 18 verbunden (Fig. 2D). Durch das unter einem hohen Druck P von meist mehr als 4000 bar [40 t] in die Form eingepresste Material (siehe die Pfeile in Fig. 2C) werden die Etiketten 23 mit der Oberfläche der Abdeckschicht 20 gegen die Innenwand 17 gepresst. Dabei stellt sich überraschenderweise heraus, dass nicht nur - wie bereits oben erwähnt - die gekräuselte Oberfläche 21 der Abdeckschicht 20 geglättet wird, sondern der bedruckte Formkörper 18 insgesamt eine hochglänzende, weitgehend ebenmässige Oberfläche aufweist, auf der ein lederartiges Aussehen praktisch nicht zu erkennen ist. Wird die Abdeckschicht 20 (und die darunterliegende Druckschicht) durch Abkratzen entfernt, zeigt sich jedoch, dass die Oberfläche der Trägerfolie 10 gleichwohl eine Kräuselung 19 ausgebildet hat. Es wird daraus gefolgert, dass die Abdeckschicht 20, die selbst eine glatte Oberfläche 21 zeigt, die Unebenheiten der darunterliegenden Trägerfolie optisch ausgleicht und praktisch verschwinden lässt.

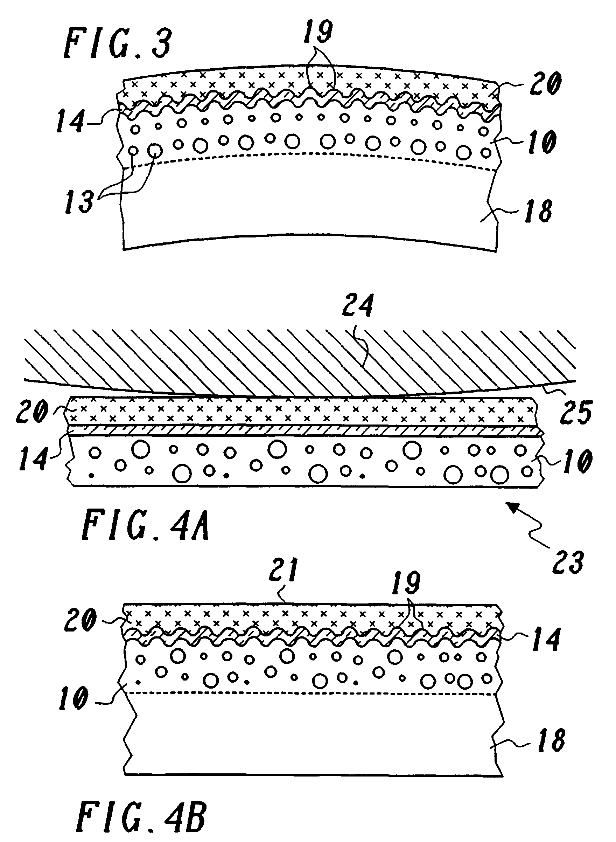

Neben der optischen Wirkung der Abdeckschicht 20 ist als weitere eine rein mechanische Wirkung denkbar. Wie in Fig. 3 angedeutet, führt ein IML-Verfahren mit Etiketten, die mit einer zusätzlichen Abdeckschicht 20 aus Klarlack beschichtet sind, nicht selten zu einer bimetallartigen Verkrümmung. Diese Verkrümmung ist offenbar darauf zurückzuführen, dass sich die Abdeckschicht 20 beim Formungsvorgang anders zusammenzieht als die darunterliegende Trägerfolie 10 mit ihren Hohlräumen 13. Wenn Abdeckschicht 20 und Trägerfolie 10 bzw. Druckschicht 14 an den Grenzflächen fest miteinander verbunden sind, behindert die Abdeckschicht im Grenzbereich das Schrumpfen und damit auch die Faltenbildung bzw. Kräuselung 19. Sofern eine solche Schichtfolgen-bedingte Krümmung auftritt oder zu erwarten ist, ist es zweckmässig und vorteilhaft, gemäss Fig. 4 eine Form 24 für das IML-Verfahren zu verwenden, die eine entsprechend (d.h. in entgegengesetzter Richtung) vorverkrümmte Innenwand 25 aufweist. Als Ergebnis einer solchen Form 24 wird gemäss Fig. 4B dann eine unverkrümmter Formkörper 18 erhalten.

Wie die oben beschriebene Verkrümmung erkennen lässt, können sich bei der Verwendung einer zusätzlichen Abdeckschicht 20 zwischen den Schichten erhebliche mechanische Spannungen aufbauen. Sofern die Haftung der einzelnen Schichten (Trägerfolie 10, Druckschicht 14, Abdeckschicht 20) aufeinander nicht ausreichend ist, kann es zu Ablösungen kommen, die den fertigen Formkörper unbrauchbar werden lassen. Es ist deshalb wichtig, für eine gute Haftung der Schichten zu sorgen. Die Haftung zwischen Druckschicht 14 und Abdeckschicht 20 hat sich als besonders zuverlässig herausgestellt, wenn UV-vernetzbare Farben mit einem UV-vernetzbaren Abdecklack kombiniert werden. Die Haftung zwischen Druckschicht 14 und der Trägerfolie 10 wird verbessert, wenn die Oberfläche 11 der Trägerfolie 10 vor dem Aufbringen der Druckschicht 14 vorbehandelt wird. Dies kann entweder dadurch geschehen, dass die Oberfläche 11 der Trägerfolie 10 einer Koronabehandlung ausgesetzt wird, oder dass die Oberfläche 11 der Trägerfolie 10 mit einem Haftvermittler (Primer) beschichtet wird.

Insgesamt ergibt sich mit der Erfindung ein IML-Verfahren, welches auf einfache und sichere Weise zu bedruckten Formkörpern mit hochglänzender Oberfläche im Bereich des Druckbildes führt.

### BEZEICHNUNGSLISTE

- 10: Trägerfolie
- 11: Oberseite (Trägerfolie)
- 12: Unterseite (Trägerfolie)
- 13: Hohlraum ("void")
- 14: Druckschicht
- 15: Oberseite (Druckschicht)
- 16,24: Form
- 17,25: Innenwand (Form)
- 18: Formkörper
- 19: Kräuselung ("Ledereffekt")
- 20: Abdeckschicht
- 21: Oberfläche (Abdeckschicht)
- 22,23: Etikett
- 24: Form
- 25: Innenwand

## Patentansprüche

1. Verfahren zum Herstellen von mit bedruckten Etiketten versehenen Formkörpern (18) nach dem sogenannten In-Mould-Labelling(IML)-Verfahren, bei welchem Verfahren durch Bedrucken einer orientierten Trägerfolie (10) aus einem thermoplastischen Polymer mit einer Druckschicht (14) bedruckte Etiketten (23) erzeugt, die bedruckten Etiketten (23) in eine Form (16) eingelegt und mit einem in die Form (16, 24) eingebrachten und bei erhöhten Temperaturen geformten Formkörper (18) stoffschlüssig verbunden werden, dadurch gekennzeichnet, dass zum Erzielen einer glänzenden Oberfläche beim fertigen Formkörper (18) die Etiketten nach dem Aufbringen der Druckschicht (14) und vor dem Einlegen in die Form (16, 24) mit einer durchsichtigen Abdeckschicht (20) beschichtet werden.

2. Verfahren nach Anspruch 1, dadurch gekennzeichnet, dass die Abdeckschicht (20) aus einem UV-vernetzbaren Klarlack besteht.

3. Verfahren nach Anspruch 2, dadurch gekennzeichnet, dass ein kationischer oder radikaler, UV-vernetzbarer Klarlack verwendet wird.

4. Verfahren nach einem der Ansprüche 2 oder 3, dadurch gekennzeichnet, dass zur Bildung der Abdeckschicht (20) der Klarlack mit einer Dicke von mehreren Gramm pro m² der Trägerfolie (10) aufgetragen wird.

5. Verfahren nach Anspruch 4, dadurch gekennzeichnet, dass der Klarlack mit einer Dicke von mehr als 3 Gramm pro m², vorzugsweise zwischen 3 und 10 Gramm pro m², aufgetragen wird.

6. Verfahren nach einem der Ansprüche 1 bis 5, dadurch gekennzeichnet, dass als Trägerfolie (10) eine ein- oder mehrschichtige Folie verwendet wird, welche überwiegend aus biaxial orientierten Polypropylen (PP) besteht und Hohlräume (13) enthält.

7. Verfahren nach einem der Ansprüche 1 bis 6, dadurch gekennzeichnet, dass die Druckschicht (14) im Offsetdruckverfahren auf die Trägerfolie (10) aufgebracht wird.

8. Verfahren nach Anspruch 7, dadurch gekennzeichnet, dass für den Offsetdruck UV-vernetzbare Farben verwendet werden.

9. Verfahren nach einem der Ansprüche 1 bis 8, dadurch gekennzeichnet, dass die Oberfläche (11) der Trägerfolie (10) vor dem Aufbringen der Druckschicht (14) zur Verbesserung der Haftung der Druckschicht (14) vorbehandelt wird.

10. Verfahren nach Anspruch 9, dadurch gekennzeichnet, dass die Oberfläche (11) der Trägerfolie (10) einer Koronabehandlung ausgesetzt wird.

11. Verfahren nach Anspruch 9, dadurch gekennzeichnet, dass die Oberfläche (11) der Trägerfolie (10) mit einem Haftvermittler (Primer) beschichtet wird.

12. Verfahren nach einem der Ansprüche 1 bis 11, dadurch gekennzeichnet, dass zum Ausgleich einer Verkrümmung der Schichtstruktur aus Formkörper (18), Trägerfolie (10), Druckschicht (14) und Abdeckschicht (20) beim In-Mould-Labelling eine Form (24) mit entsprechend vorverkrümmter Innenwand (25) verwendet wird.

13. Etikett (23) für ein In-Mould-Labelling(IML)-Verfahren, welches Etikett (23) eine orientierte Trägerfolie (10) aus einem thermoplastischen Polymer umfasst, die mit einer Druckschicht (14) bedruckt ist, dadurch gekennzeichnet, dass das Etikett über der Druckschicht 14 mit einer durchsichtigen Abdeckschicht (20) beschichtet ist.

14. Etikett nach Anspruch 13, dadurch gekennzeichnet, dass die Abdeckschicht (20) aus einem UV-vernetzbaren Klarlack besteht.

15. Etikett nach Anspruch 14, dadurch gekennzeichnet, dass die Abdeckschicht (20) aus einem kationischen oder radikalen, UV-vernetzbarer Klarlack besteht.

16. Etikett nach einem der Ansprüche 13 bis 15, dadurch gekennzeichnet, dass die Trägerfolie (10) eine einoder mehrschichtige Folie ist, welche überwiegend aus biaxial orientiertem Polypropylen (PP) besteht und Hohlräume (13) enthält.

## Claims

1. A process for producing moulded articles (18) provided with printed labels, according to the so-called in-mould-labelling (IML)-process, in which process, by printing of an oriented carrier film (10) made of a thermoplastic polymer with a printed layer (14), printed labels (23) are produced; the printed labels (23) are placed in a mould (16) and are integrally connected to a moulded article (18) inserted into the mould (16, 24) and moulded at elevated temperatures, characterised in that to ensure a glossy surface of the finished moulded article (18), the labels, after application of the printed layer (14) and prior to placement into the mould (16, 24) are coated with a transparent cover layer (20).

2. A process according to claim 1, characterised in that the cover layer (20) comprises a UV cross-linkable transparent lacquer.

3. A process according to claim 2, characterised in that a cationic or radical, UV- cross-linkable transparent lacquer is used.

4. A process according to one of claims 2 or 3, characterised in that the transparent lacquer forming the cover layer is applied at a rate of several grams per m² of carrier film (10).

5. A process according to claim 4, characterised in that the transparent lacquer is applied at a rate exceeding 3 grams per m², preferably between 3 and 10 grams per m².

6. A process according to one of claims 1 to 5, characterised in that the carrier film (10) used, is a one-layer or multilayer film predominantly comprising biaxially-oriented polypropylene (PP) and containing voids (13).

7. A process according to one of claims 1 to 6, characterised in that the printed layer (14) is applied to the carrier film (10) in an offset printing process.

8. A process according to claim 7, characterised in that UV cross-linkable colours are used for offset printing.

9. A process according to one of claims 1 to 8, characterised in that for improved adhesion of the printed layer (14), the top surface (11) of the carrier film (10) is pre-treated.

10. A process according to claim 9, characterised in that the top surface (11) of the carrier film (10) is subjected to corona treatment.

11. A process according to claim 9, characterised in that the top surface (11) of the carrier film (10) is coated with a primer supporting adhesion.

12. A process according to one of claims 1 to 11, characterised in that, to compensate for bending of the layer structure comprising moulded article (18), carrier film (10), printed layer (14) and cover layer (20), during in-mould-labelling, a mould (24) with an interior wall 25 that is pre-bent accordingly, is used.

13. A label (23) for an in-mould-labelling (IML)-process, the said label (23) comprising an oriented carrier film (10) of thermoplastic polymer covered by a printed layer (14), characterised in that the label, above the printed layer (14), is coated with a transparent cover layer (20).

14. A label according to claim 13, characterised in that the cover layer (20) comprises a UV cross-linkable transparent lacquer.

15. A label according to claim 14, characterised in that the cover layer (20) comprises a cationic or radical, UV-cross-linkable transparent lacquer.

16. A label according to one of claims 13 to 15, characterised in that the carrier film (10) is a one-layer or multilayer film predominantly comprising biaxially-oriented polypropylene (PP) and containing voids (13).

## Revendications

1. Procédé de fabrication d'articles moulés (18) pourvus d'étiquettes imprimées selon le procédé dit In-Mould-Labelling (IML), suivant lequel des étiquettes imprimées (23) sont produites par impression d'une feuille support orientée (10) à base d'un polymère thermoplastique avec une couche d'impression (14), les étiquettes imprimées (23) sont déposées dans un moule (16) et solidarisées par adhésion de la matière à un article moulé (18) introduit dans le moule (16, 24) et formé à des températures accrues, caractérisé en ce que pour obtenir une surface brillante de l'article moulé (18), les étiquettes sont enduites d'une couche de revêtement transparente (20) après l'application de la couche d'impression (14) et avant d'être déposées dans le moule (16, 24).

2. Procédé selon la revendication 1, caractérisé en ce que la couche de revêtement (20) se compose d'une laque transparente réticulable par les UV.

3. Procédé selon la revendication 2, caractérisé en ce qu'on utilise une laque transparente cationique ou radicalaire réticulable par les UV.

4. Procédé selon l'une des revendications 2 ou 3, caractérisé en ce que pour former la couche de revêtement (20), la laque transparente est appliquée en une épaisseur de plusieurs grammes par m² de la feuille support (10).

5. Procédé selon la revendication 4, caractérisé en ce que la laque transparente est appliquée en une épaisseur de plus de 3 gammes par m², de préférence entre 3 et 10 grammes par m².

6. Procédé selon l'une des revendications 1 à 5, caractérisé en ce qu'en guise de feuille support (10), on utilise une feuille à une ou à plusieurs couches, qui se compose principalement de polypropylène orienté biaxialement (PP) et renferme des cavités (13).

7. Procédé selon l'une des revendications 1 à 6, caractérisé en ce que la couche d'impression (14) est appliquée sur la feuille support (10) selon le procédé offset.

8. Procédé selon la revendication 7, caractérisé en ce que pour le procédé offset, on utilise des encres réticulables par les UV.

9. Procédé selon l'une des revendications 1 à 8, caractérisé en ce que la surface (11) de la feuille support (10) est traitée préalablement à l'application de la couche d'impression (14), en vue d'améliorer l'adhérence de la couche d'impression (14).

10. Procédé selon la revendication 9, caractérisé en ce que la surface (11) de la feuille support (10) est soumise à un traitement en effet corona.

11. Procédé selon la revendication 9, caractérisé en ce que la surface (11) de la feuille support (10) est enduite d'un agent adhésif (primer).

12. Procédé selon l'une des revendications 1 à 11, caractérisé en ce que pour compenser une déformation de la structure lamifiée constituée de l'article moulé (18), de la feuille support (10), de la couche d'impression (14) et de la couche de revêtement (20), on utilise dans le procédé d'In-Mould-Labelling, un moule (24) présentant une paroi intérieure (25) ayant une déformation préalable correspondante.

13. Etiquette (23) pour un procédé d'In-Mould-Labelling (IML), étiquette (23) comprenant une feuille support orientée (10) à base d'un polymère thermoplastique couverte d'une couche d'impression (14), caractérisée en ce que l'étiquette est revêtue d'une couche de revêtement transparente (20) au-dessus de la couche d'impression (14).

14. Etiquette selon la revendication 13, caractérisée en ce que la couche de revêtement (20) se compose d'une laque transparente réticulable par les UV.

15. Etiquette selon la revendication 14, caractérisée en ce que la couche de revêtement (20) se compose d'une laque transparente cationique ou radicalaire réticulable par les UV.

16. Etiquette selon l'une des revendications 13 à 15, caractérisée en ce que la feuille support (10) est une feuille à une ou à plusieurs couches qui se compose principalement de polypropylène (PP) étiré biaxialement et renferme des cavités (13).
